(19) Europäisches Patentamt
European Patent Office
Office européen des brevets

(11) **EP 3 502 580 B1**

(12) **FASCICULE DE BREVET EUROPEEN**

(45) Date de publication et mention
de la délivrance du brevet:
**21.06.2023 Bulletin 2023/25**

(21) Numéro de dépôt: **18213121.9**

(22) Date de dépôt: **17.12.2018**

(51) Classification Internationale des Brevets (IPC):
**F24F 7/06** (2006.01)          **F24F 11/72** (2018.01)
**F24F 13/14** (2006.01)

(52) Classification Coopérative des Brevets (CPC):
**F24F 11/72; F24F 7/06; F24F 13/14;** F24F 11/74;
F24F 11/77; F24F 12/006; F24F 2110/10;
F24F 2110/20; F24F 2110/66; F24F 2110/70;
F24F 2110/72; F24F 2120/10; F24F 2140/10;
Y02B 30/56; Y02B 30/70

(54) **PROCEDE DE DISTRIBUTION D'AIR**

VERFAHREN ZUR LUFTVERTEILUNG

AIR DISTRIBUTION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2017 FR 1762499**

(43) Date de publication de la demande:
**26.06.2019 Bulletin 2019/26**

(73) Titulaire: **Aereco**
**77615 Marne la Vallée Cedex 03 (FR)**

(72) Inventeur: **STOICHITA, Catalin**
**77615 MARNE LA VALLEE CEDEX 3 (FR)**

(74) Mandataire: **Germain Maureau**
**12, rue Boileau**
**69006 Lyon (FR)**

(56) Documents cités:
FR-A1- 2 805 601      FR-A1- 2 884 904
FR-A1- 3 013 424      FR-A1- 3 028 012
FR-A1- 3 036 465      FR-B1- 2 805 601

**Description**

La présente invention décrit un procédé de distribution de l'air de ventilation soufflé ou extrait vers ou depuis les pièces d'un habitat.

On connaît de l'art antérieur des agencements de conduits, ventilateurs, échangeurs de calories, bouches d'extraction et de soufflage d'air formant des systèmes de ventilation permettant d'améliorer la qualité de l'air respiré par les occupants d'un habitat et/ou de chauffer l'habitat. Ces systèmes ont pour but d'améliorer le confort des occupants et de réaliser des économies d'énergie.

A titre d'exemple, le document FR2899319 décrit un dispositif de ventilation et de chauffage aéraulique de locaux proposant le chauffage et/ou le rafraîchissement d'un local au moyen du vecteur air, en permettant une régulation thermique pièce par pièce, ainsi qu'une gestion adéquate des débits de ventilation et donc de la qualité d'air intérieur pièce par pièce.

Ce document décrit un caisson où l'air de ventilation arrive avant de sortir par des trous de diamètres prédéfinis, vers les conduits de distribution dans les pièces de l'habitat. Ce système peut ainsi augmenter le débit d'air insufflé tout en conservant le même rapport entre les différentes pièces. Plusieurs éléments destinés au traitement thermique de l'air sont prévus, particulièrement devant les trous de sortie pour pouvoir contrôler la température dans chaque pièce. Le chauffage de chaque pièce est réalisé indépendamment les unes des autres.

Cependant, la répartition de l'air insufflé dans les pièces est figée par construction de façon à fournir un débit d'air réglementaire dans chaque pièce. Cela revient à ventiler les pièces constamment qu'elles soient habitées ou non, ce qui représente le gaspillage de l'énergie engendrée par le processus de ventilation ainsi que de l'énergie correspondante aux pertes caloriques vers l'extérieur du local. En ce qui concerne l'écoulement de l'air dans les conduits l'amenant vers les pièces et la gestion de l'énergie engendrée, ce document donne très peu de détails. Par exemple, aucune considération n'est faite sur le niveau de pression utilisé dans le caisson. En page 6, ligne 9 à 14 il est dit seulement que "Le débit d'air neuf de ventilation amené dans une pièce de séjour peut être sensiblement constant et indépendant de la température de consigne dans ladite pièce. En variante, ce débit peut être asservi à au moins un paramètre mesuré dans le local et correspondant au besoin de ventilation de celui-ci (présence d'un ou plusieurs occupants, taux de $CO_2$, taux d'humidité, ou tout autre traceur de pollution dans la pièce considérée)."

Un autre document GB2449498 propose des conduits connectés aux pièces d'un habitat, dont un premier sous-jeu de conduits connectés ensemble à un premier collecteur qui est destiné à extraire l'air des pièces. Les conduits restants sont connectés ensemble à un deuxième collecteur en formant un deuxième sous-jeu destiné à apporter de l'air dans les pièces de l'habitat. Le but de ce système est de chauffer un habitat avec le maximum d'économie d'énergie.

Ce système permet donc d'économiser l'énergie en modulant le soufflage dans les pièces de l'habitat en fonction de signaux provenant d'une série de détecteurs de présence.

Cependant, ce document est silencieux sur les moyens mis en oeuvre pour transporter efficacement l'air en question et ne décrit pas la gestion de l'énergie dans le transport de cet air même si l'économie d'énergie est son principal but.

Un autre document FR3028012 propose un équipement de ventilation comprenant un hub de distribution modulé d'air neuf. Cet équipement est adaptable à un dispositif de ventilation double flux afin d'optimiser la ventilation par la modulation du flux de soufflage d'air neuf et du flux d'extraction d'air vicié.

Dans un mode de fonctionnement possible du dispositif de ventilation, la pression à l'entrée du dispositif de ventilation, c'est-à-dire au niveau de la tuyère d'extraction, est maintenue constante alors que des vannes d'extraction permettent de moduler le flux d'extraction. Une telle approche, basée sur une dépression constante, convient bien à certains clapets auto-réglables en fonction de l'humidité de l'air (hygro-réglables) et qui sont calibrés pour fonctionner avec une dépression spécifique, par exemple de -60Pa.

Toutefois, le maintien d'une dépression importante à l'extraction, en permanence, entraîne souvent des problèmes de bruit du type sifflement ou turbulence et de consommation énergétique, notamment quand ces clapets sont proches de la fermeture.

Il est proposé en page 7 lignes 19-28 un autre mode de fonctionnement pour cet équipement décrit de la manière suivante: « en conjonction avec le dispositif de ventilation, le procédé consiste à ce que l'équipement n'intervienne pas dans la modulation du flux d'extraction mais à seulement dimensionner le flux d'extraction en fonction des besoins d'insufflation, ... la vanne de compensation d'insufflation qui peut être placée n'importe où. »

La description de ce deuxième mode de fonctionnement est critiquable par son manque de clarté et de précision, surtout lorsqu'il est mentionné qu'un composant est placé "n'importe où".

De plus, aucun exemple de fonction, quelle que soit sa forme, mathématique ou comme une règle de dépendance n'est donné.

La solution n'est pas exposée dans ce document, de façon suffisamment claire et complète pour qu'un homme de métier puisse l'exécuter.

Toutefois, il semble quand même que le fonctionnement de l'équipement est basé sur deux pressions "nominales" nommées PE, et PS à maintenir constantes pendant la variation des "besoins" d'extraction et/ou de soufflage, par des procédés de régulation qui ne sont pas définis. Dans les trois documents précédents, les conditions énergétiques du transport de l'air ne sont pas prises en compte. Le manque d'optimisation énergétique dans le transport de l'air créé des conditions favorables à la génération de bruits excessifs dans la tuyauterie comme des sifflements, la vibration des divers éléments ou des bruits de frottement ou de turbulence d'air.

Dans certains pays, comme par exemple la Belgique, le débit maximal d'air soufflé dans une pièce est limité par normes.

Des systèmes de ventilation, comme celui du document EP2363656, proposent des moyens pour garantir le non dépassement de ces débits maximaux.

Ce document propose une méthode applicable à des systèmes de ventilation ayant un contrôleur de débit d'air pour chaque terminal de soufflage ou d'extraction.

Le but de cette méthode est exclusivement de déterminer les positions d'ouverture maximales de ces contrôleurs de débit, correspondant au débit maximal autorisé à souffler ou à extraire.

L'invention décrite dans EP2363656B1, est critiquable des faits suivants :

- en disant tout simplement "... les coefficients de débit ... sont calcules sur la base des mesures réalisées...", elle passe complètement sous silence les équations ou les règles dont l'homme de métier a besoin pour exécuter l'invention ; dans le même sens de l'imprécision on constate qu'il n'y a pas un mot sur la prise en compte des pertes de charges dans la tuyauterie, la discussion étant sur les régulateurs de débit seulement.

Cependant, ce document se focalise exclusivement sur la condition de débit maximum et propose de choisir une pression de distribution qui doit assurer la capacité de ventilation maximale partout, ce qui entraine un transport d'air d'une manière non optimale dans les situations où les demandes en ventilation ne demandent pas le débit maximal.

On connaît aussi le document FR3017448 qui s'applique à un système de ventilation équipé de registres de réglage de débits pour chaque conduit de distribution d'air.

Il est proposé l'utilisation d'au moins un organe de mesure conçu pour mesurer le débit d'air en entrée ou en sortie du registre dans chaque conduit et un ventilateur fonctionnant à une pression déterminée en parcourant une succession d'étapes, nommées de A à G, de fermeture et ouverture des registres accompagné par les mesures de débit avec les organes de mesure de débit individuel attachés à chaque conduit et de pression du ventilateur afin de déterminer par calcul, dans une étape G, la valeur de débit de fuite du conduit en fonction de la pression réelle du conduit déterminée à une étape F et du débit d'air du conduit mesuré en étape D.

En essayant de résoudre des problèmes de fuites possibles dans l'installation, cette solution apporte une amélioration énergétique au système de ventilation.

Toutefois, elle ne participe pas à l'optimisation des conditions de transport pendant le processus de régulation de la distribution d'air car elle se limite strictement à décrire une méthode de diagnostic d'étanchéité.

La présente invention a pour objet de remédier à ces inconvénients en proposant un procédé de distribution d'air de ventilation soufflé vers ou extrait depuis au moins une pièce d'un habitat assurant le transport de l'air de ventilation à la plus faible pression possible afin de réduire la consommation énergétique tout en réduisant les nuisances sonores.

A cet effet, l'invention concerne un procédé de distribution de l'air de ventilation soufflé vers ou extrait depuis les pièces d'un habitat à travers un réseau de distribution comprenant des conduits de distribution suivant la revendication 1.

Le procédé utilise un ou plusieurs capteurs de demande de ventilation de la pièce disposés dans au moins une pièce et utilise un capteur de pression, ce capteur de pression étant installé de sorte à mesurer la pression dans un tronc commun de soufflage, quand le procédé est appliqué à l'air soufflé ou étant installé de sorte à mesurer la pression dans un tronc commun d'extraction, quand le procédé est appliqué à l'air d'extrait.

Le procédé utilise des vannes de régulation commandables pour moduler l'air distribué.

Selon l'invention, le transport de l'air est réalisé à une pression minimale dans le tronc commun déterminée à partir des capteurs de demande de ventilation de pièce et des paramètres aérauliques du réseau de distribution.

Le procédé peut comprendre au moins une étape de détermination des débits individuels dans chaque conduit de distribution comportant des étapes de mesures, de calcul et/ou de lecture d'abaques ou de tableaux ou de combinaisons de ces méthodes.

Selon l'invention, le procédé comprend:

- une première étape d'acquisition d'information sur la demande de ventilation de la pièce par au moins un des capteurs de demande de ventilation de pièce et de conversion en demandes de débit d'air $Q_n$ associé à chaque conduit de distribution,
- une deuxième étape de calcul pour chacun des n conduits de distribution d'air de ventilation, d'une pression $Ps_n$ lorsque de l'air est soufflé ou $Pe_n$ lorsque de l'air est extrait, nécessaire dans le tronc commun pour assurer le débit

d'air demandé $Q_n$ dans chaque conduit de distribution, en considérant la vanne de régulation en position d'ouverture maximale et en prenant en compte les coefficients de perte de charge $Kt_n$ dus aux pertes de charge pendant le trajet de l'air dans les conduits de distribution respectifs,

- une troisième étape de détermination de la pression maximale Pm parmi les valeurs de pressions d'air $Ps_n$ ou $Pe_n$ calculées, cette valeur Pm étant la pression minimale qui satisfait les besoins de ventilation dans toutes les pièces, et
- une quatrième étape de calcul des positions d'ouverture $\alpha_n$ pour chaque vanne de régulation permettant d'obtenir un débit d'air ajusté dans chaque conduit de distribution en fonction de la pression Pm, du débit d'air demandé $Q_n$ et du coefficient de perte de charge $Kt_n$ sur le trajet de l'air dans chaque conduit de distribution, les informations de positions d'ouverture étant transmises vers les vannes de régulation.

De préférence, le procédé comprend une cinquième étape de calcul de la somme des débits d'air demandés Qt et d'augmentation des ouvertures des vannes de régulation si le besoin en débit d'air est supérieur à la somme des débits d'air demandés Qt.

Avantageusement, lors de la deuxième étape, pour calculer la pression $Ps_n$ demandée, il est appliqué la formule $Ps_n = Q^2_n * (Kt_n + Kv(0))$ dans laquelle n est l'index d'un conduit de distribution, $Q_n$ est le débit d'air demandé, $Kt_n$ est un coefficient de perte de charge spécifique au trajet de l'air dans le conduit de distribution et Kv(0) est la perte de charge induite par la vanne de régulation en position ouverte au maximum.

Lors de la quatrième étape, $\alpha_n$ peut être calculé avec la formule suivante:

$\alpha_n = K^{-1}_v(Ps/Q^2 - Kt_n)$, $K^{-1}_v$ étant la fonction réciproque du coefficient de perte de charge $Kv(\alpha)$.

De préférence, le procédé comprend, parallèlement aux étapes 1 à 4, une opération de régulation de la pression dans le tronc commun de façon à ce que cette pression soit égale à la pression Pm calculée lors de la troisième étape du procédé.

Les capteurs de demande de ventilation de pièce peuvent mesurer un taux de $CO_2$, de CO, de COV ou d'humidité ou la présence ou le mouvement d'une personne dans la pièce ou la température ou la pression différentielle intérieur/extérieur de l'habitat.

Le contrôle de la pression peut être réalisé par un capteur de pression positionné dans le tronc commun.

Avantageusement, le contrôle de la pression est réalisé par le contrôle de la vitesse du moteur du ventilateur.

Le procédé peut être appliqué à un système de ventilation comportant un dispositif de ventilation du type à double flux. L'ajustement à la pression Pm, en cas d'insuffisance de pression, est réalisé en provoquant la variation du flux d'air opposé et indirectement, par l'intermédiaire de l'équilibrage des débits extraction/soufflage présents dans le dispositif de ventilation à double flux.

Les coefficients de perte de charge $Kt_n$ dans chaque conduit de distribution peuvent être calculés à partir de plusieurs mesures de débit total et de la pression dans le tronc commun, pour différentes positions d'ouvertures des vannes de régulation. Pour cela, une boucle de régulation en pression est ouverte, laissant le ventilateur tourner à un régime déterminé, approximativement fixe.

Alternativement, chaque coefficient de perte de charge $Kt_n$ est calculé à partir d'au moins deux mesures de pression dans le tronc commun correspondant à deux positions d'ouvertures distinctes d'une vanne de régulation et en condition de débit d'air total quasi constant, les autres vannes de régulation étant fermées.

L'invention permet ainsi de fournir un procédé de distribution d'air de ventilation soufflé vers ou extrait depuis au moins une pièce d'un habitat assurant le transport de l'air de ventilation à la plus faible pression possible afin de réduire la consommation énergétique tout en réduisant les nuisances sonores du type sifflement ou turbulence.

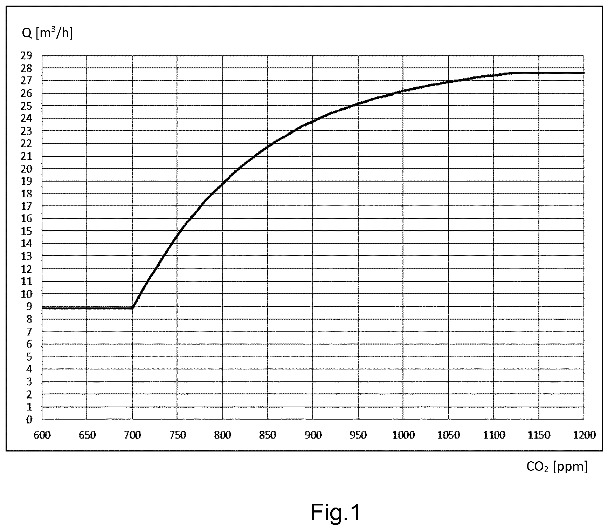

Les caractéristiques de l'invention seront décrites plus en détail en se référant à la figure 1:

- la figure 1 représente une courbe illustrant le débit d'air Q nécessaire en fonction de la concentration de $CO_2$ dans une pièce.

L'invention concerne un procédé de distribution de l'air de ventilation soufflé vers ou extrait depuis au moins une pièce d'un habitat par un système de distribution d'air comprenant n conduits de distribution d'air de ventilation reliés d'une part à un tronc commun et d'autre part à une des pièces respectives de l'habitat pour souffler de l'air dans ou extraire de l'air de la pièce, n étant au moins égal à 1.

Le tronc commun ou la canalisation commune peut être toute conduite/caisson/nourrice située en amont de (tous) les emmanchement(s).

Le système de distribution d'air comprend également une vanne de régulation du débit d'air (ou vanne commandable, clapet, volet ou valve) positionnée dans chaque conduit de distribution d'air (conduit d'entrée d'air ou conduit d'extraction d'air), au moins un capteur de demande de ventilation de la pièce positionné dans la pièce et un ventilateur comportant un moteur pour faire circuler l'air à travers le système de distribution d'air.

La vanne de régulation peut être une vanne proportionnelle reliée à un boîtier de commande dans lequel sont réalisés tous les calculs décrits ultérieurement.

Ce procédé est applicable aux systèmes de distribution d'air de ventilation capables de moduler le débit d'air soufflé dans chaque pièce grâce aux vannes de régulation insérées dans chaque conduit de distribution amenant l'air vers cette pièce et capables de contrôler soit le débit total soufflé dans l'habitat, soit la pression totale de soufflage Pm dans le tronc commun de soufflage du réseau de distribution.

Le procédé est aussi applicable aux systèmes d'extraction de l'air de ventilation capables de moduler le débit d'air extrait de chaque pièce grâce aux vannes de régulation insérées dans chaque conduit amenant l'air depuis cette pièce et capables de contrôler soit le débit total extrait de l'habitat, soit la pression totale Pm d'extraction dans le tronc commun d'extraction du réseau de de distribution.

De préférence, l'extraction d'air est réalisée dans les zones humides comme les salles de bain et le soufflage de l'air dans les pièces sèches comme les chambres.

Le procédé est applicable indépendamment des raisons pour lesquelles l'air est soufflé ou extrait.

Quand le procédé est appliqué sur le réseau de soufflage, une mesure de pression est réalisée par un capteur de pression disposé dans le tronc commun de soufflage et quand le procédé est appliqué sur le réseau d'extraction, une mesure de pression est réalisée dans le tronc commun d'extraction.

Il n'y a pas de différence notoire entre l'application du procédé sur le réseau d'extraction ou sur le réseau de soufflage. Le seul changement important est le signe de la pression. Elle est positive dans le réseau de soufflage et devient négative (dépression par rapport à l'atmosphère ambiante) dans le réseau d'extraction.

Pour simplifier la description, ce qui suit décrit une application du procédé à un réseau de soufflage d'air qui est appelé de manière général « réseau de distribution ». Le procédé est transposable à un réseau d'extraction d'air.

Le procédé peut s'appliquer à des installations qui servent exclusivement à ventiler de l'air pour la respiration (gestion de la qualité de l'air intérieur) ou exclusivement pour conditionner thermiquement l'habitat (chauffage ou rafraîchissement) ou pour les deux à la fois.

Le procédé s'applique donc à des systèmes de ventilation "modulables par la demande". La « demande » dans une pièce est mesurée par un capteur de demande de ventilation comme par exemple un:

- capteur de taux d'humidité dans l'air, utilisable pour un réseau d'extraction qui tire l'air dans les pièces dites "humides" telle que salle de bain, toilette, cuisine, etc.,
- capteur de concentration de $CO_2$ dans une pièce d'activité, chambre à coucher, etc.,
- capteur de concentration de CO dans une pièce d'activité, chambre à coucher, etc.,
- capteur de concentration de COV (Composants Organiques Volatiles) dans une pièce d'activité, chambre à coucher, etc.,
- capteur de présence ou de mouvement qui estime le nombre de personnes occupant une pièce d'activité,
- capteur de température installé dans une pièce d'activité, chambre à coucher, etc.,
- capteur de température installé dans une pièce d'activité, chambre à coucher, etc.,
- capteur de pression différentielle intérieur/extérieur de l'habitat,
- simple générateur de signal actionné manuellement par un occupant des lieux.

La liste ci-dessus n'est pas limitative.

Le procédé selon la présente invention comprend deux processus de régulation de l'air.

Le premier processus du procédé de distribution d'air concerne la modulation des débits d'air de ventilation dans les pièces en fonction des demandes de ventilation dans ces pièces et se déroule en cycle continu de régulation comprenant plusieurs étapes dédiées à distribuer l'air nécessaire à la ventilation sous la plus petite pression possible, évitant ainsi les inconvénients de surconsommation énergétique et de bruits.

Le procédé peut comprendre au moins une étape de détermination des débits individuels dans chaque conduit de distribution comportant des étapes de mesures, de calcul et/ou de lecture d'abaques ou de tableaux ou de combinaisons de ces méthodes.

Dans le cycle de ce processus, une première étape est dédiée à l'acquisition des demandes d'information de demande de ventilation de la pièce par au moins un des capteurs de demande de ventilation de pièce et à leurs conversions en demandes de débit d'air $Q_n$ à apporter par chaque conduit de distribution amenant l'air vers les pièces à ventiler.

En fonction de la source de la demande de ventilation, c'est-à-dire du type de capteur, l'information recueillie peut présenter des unités de mesure différentes telles que ppm, %, nombre de personnes, ou détections pas minute, etc.

Le signal ou l'information acquise est convertie de façon à représenter la mesure de la "demande de débit d'air" (mesurable, par exemple en $m^3/h$).

Pour réaliser cette conversion de signal, une diversité de méthodes peut être utilisée. Il est opportun d'utiliser des règles et valeurs réglementaires trouvées dans les normes de l'habitat qui prévoient des débits minimaux d'aération à respecter en fonction de la destination de la pièce et en fonction du nombre d'occupants.

A titre d'exemple non limitatif, la figure 1 représente une fonction possible de conversion entre la mesure de

la concentration de $CO_2$ donnée en ppm et le débit minimal à souffler dans une chambre, donné en $m^3/h$.

Comme autre exemple de conversion du signal de demande en mesure de la demande de débit d'air, les capteurs de présence génèrent un signal représentant le nombre de personnes dans la pièce. On peut raisonnablement considérer la simple conversion de la demande basée sur la proportionnalité du débit d'air soufflé en fonction du nombre de personnes occupant la pièce.

Dans le cas où il y a plusieurs conduits de distribution qui amènent de l'air dans une même pièce, il faut répartir le débit dans chaque conduit de distribution.

Par exemple, le débit peut être réparti à fraction égale dans chaque conduit de distribution. A la fin de cette première étape, le débit d'air $Q_n$ demandé et à délivrer par chaque conduit de distribution est défini.

D'autres méthodes sont également possibles pour calculer la demande de débit d'air à partir des signaux des capteurs de demande de ventilation de pièce. La fonction exacte de conversion appliquée reste en majeure partie le libre choix du concepteur de l'installation.

Une deuxième étape du premier processus du procédé de distribution d'air consiste à calculer pour chaque conduit de distribution d'air de soufflage vers les pièces, la pression $Ps_n$ nécessaire dans le tronc commun de soufflage pour assurer le débit d'air demandé $Q_n$, en considérant la vanne de régulation ouverte au maximum et en prenant en compte les paramètres établissant la perte de charge sur le trajet de distribution, c'est-à-dire en calculant les coefficients de perte de charge $Kt_n$. Des exemples de calcul sont décrits ultérieurement.

La position dans le tronc commun de soufflage où la pression $Ps_n$ est calculée correspond à la position du capteur de pression.

Le capteur de pression peut, par exemple, être positionné dans un hub de distribution.

De préférence, l'écoulement de l'air est considéré comme laminaire. De préférence, pour calculer la pression $Ps_n$ demandée, il est appliqué une formule simplifiée du type :

$$Ps_n = Q^2_{n*}( Kt_n + Kv(0) )$$

où :

- n est l'index d'un conduit de distribution quelconque,
- $Q_n$ est le débit d'air demandé,
- $Kt_n$ est un coefficient de perte de charge spécifique au trajet de l'air dans le conduit de distribution (dépendant essentiellement de sa section, de sa longueur mais aussi d'autres éléments pouvant se trouver insérés comme des grilles, coudes, raccordement, etc.),
- $Kv(0)$ est la perte de charge induite par la vanne de régulation en position ouverte au maximum.

Pour la vanne de régulation, son modèle aéraulique peut être pris en considération à travers la variation de son coefficient de perte de charge $Kv(\alpha)$ en fonction de sa position d'ouverture $\alpha$ imposée par le procédé ici décrit.

L'origine de son mouvement est considérée à la position complètement ouverte d'où la notation $Kv(0)$. Il est supposé que toutes les vannes de régulation sont identiques. Pour cette raison, il n'y a pas d'index "n" pour son coefficient de perte de charge.

En variante, pour les installations comprenant différent type de vannes de régulation, il est nécessaire de considérer une fonction spécifique à chacune des vannes.

Une troisième étape du premier processus de ce procédé est de déterminer la plus grande pression parmi les pressions $Ps_n$ calculées, qui est nommée Pm.

Selon un mode de réalisation possible décrit plus loin, cette pression Pm est établie dans le tronc commun, grâce à un deuxième processus parallèle destiné à sa régulation.

Le premier processus du procédé de distribution comprend une quatrième étape de calcul de la position d'ouverture nécessaire à chaque vanne de régulation de débit d'air dans les conduits de distribution.

Cette position d'ouverture est fonction de la pression Pm, du débit d'air demandé $Q_n$ et du coefficient de perte de charge $Kt_n$ du flux d'air dans chaque conduit de distribution.

Soit la fonction $Kv(\alpha)$ :

$$Kv(\alpha_n) = Ps/Q^2_n - Kt_n$$

Il est ensuite utilisé la fonction réciproque de $Kv(\alpha)$ qui est notée avec $\alpha = K^{-1}_v(k)$ pour trouver la position d'ouverture de la vanne désirée $\alpha_n$.

Il est donc calculé :

$$\alpha_n = K^{-1}_v(Ps/Q^2 - Kt_n)$$

Les fonctions coefficient de perte de charge $Kv(\alpha)$ et sa réciproque $K^{-1}_v(k)$ peuvent être estimées par calcul des éléments finis sur le modèle géométrique de la vanne de régulation.

En variante, il est possible d'établir un tableau de calibration en laboratoire et de l'utiliser comme abaque de calcul, éventuellement avec une simple interpolation linéaire entre les points de calibration.

De préférence, le premier processus du procédé de distribution comprend une cinquième étape de calcul de la somme des débits d'air demandés Qt et d'augmentation des ouvertures des vannes de régulation si le besoin en air est supérieur à la somme des débits d'air demandés Qt.

Cette cinquième étape est nécessaire s'il faut faire passer plus d'air que la somme des demandes de débit d'air.

Ceci peut être le cas si le débit de l'air extrait de l'habitat est très grand à cause, de l'humidité dans une salle de bain tandis que l'air dans les autres pièces est propre et n'ont pas grand besoin de ventilation.

Le maintien de l'égalité entre le débit d'extraction et le débit de soufflage implique donc un grand débit de soufflage, plus que le débit d'air demandé, conformément au calcul de la première étape.

L'excès de débit sera réparti sur toutes les vannes de régulation dont la position $\alpha_n$ est non nulle.

Une méthode simple de répartition, donnée à titre d'exemple non limitatif est de modifier toutes les valeurs $\alpha_n$ précédemment calculées par multiplication avec un coefficient sous-unitaire choisit suffisamment petit pour passer le débit obligatoire. En situation extrême, ce coefficient devient zéro et toutes les vannes de régulation doivent s'ouvrir au maximum.

A la fin de la quatrième étape, ou après la cinquième étape s'il y en a une, les vannes de régulation sont commandées pour se positionner aux positions calculées $\alpha_n$ ou aux positions calculées après la cinquième étape.

Les vannes de régulation affectées aux conduits de distribution ayant demandé la pression maximale Pm sont commandées en ouverture totale.

Dans le processus exposé ci-dessus, les étapes sont réalisées dans la chronologie à titre d'exemple, en utilisant les termes de "première étape", "deuxième étape", etc., seulement pour faciliter la compréhension du procédé. L'ordre de ces étapes peut être différent.

Les calculs du procédé peuvent être réalisés, par exemple, par des circuits analogiques, des circuits numériques type FPGA, des microcontrôleurs programmés, ou un mélange de ces technologies.

Ces technologies mettent en oeuvre des processus de calcul parallèles qui font disparaître la chronologie des étapes.

Les calculs peuvent donc être réalisés simultanément selon une variante possible.

Une caractéristique de ce processus de modulation est sa lenteur, car les demandes de ventilation varient en général, lentement. A titre d'exemple, il est possible de considérer qu'un temps de réponse entre la modification d'une demande et la modification des positions des vannes de régulation, de l'ordre de la minute est suffisant pour une telle régulation.

Procédé de distribution comprend également un deuxième processus de distribution d'air, qui est de préférence appliqué parallèlement à la modulation des débits d'air selon le premier processus de distribution d'air.

Ce deuxième processus concerne la régulation en pression. Cette régulation de pression utilise comme consigne la pression Pm, calculée dans la troisième étape décrite ci-dessus et comme mesure la pression Ps mesurée dans le tronc commun de soufflage (dans le hub de distribution par exemple). Pour obtenir l'égalité des deux valeurs de pression, le régulateur agit via des moyens de contrôle de la pression.

A titre d'exemple, les moyens de contrôle de la pression peuvent être un capteur de pression positionné dans le tronc commun.

Alternativement, les moyens de contrôle de la pression peuvent comprendre des moyens de contrôle de la vitesse du moteur du ventilateur.

Dans ce cas, une règle de type intégrateur est suffisante pour constituer une bonne boucle de régulation pour la pression Ps, à réaction négative, stable et avec des temps de réponse de l'ordre de quelques secondes seulement.

Un autre exemple non limitatif est l'utilisation d'un dispositif de ventilation à double flux qui souffle l'air à distribuer dans les pièces et pour lequel nous n'avons pas accès au contrôle direct de la vitesse du ventilateur de soufflage.

La plupart de ces dispositifs de ventilation à double flux assurent l'égalité entre le débit d'air soufflé et le débit d'air extrait.

Dans ce cas, il est possible de profiter de l'équilibrage des débits par l'intermédiaire d'une vanne de compensation à l'extraction connectée sur le réseau de conduits d'extraction.

Le contrôle des ouvertures des vannes d'extraction permet de s'affranchir des vannes de régulation supplémentaires, en modifiant simplement les ouvertures de ces vannes d'extraction, quand le débit d'air soufflé ne suffit pas.

Enfin, toute méthode qui permet d'augmenter l'extraction présente un intérêt d'utilisation pour le cas ici considéré. Si le débit d'air soufflé par le double flux, n'est pas suffisant pour atteindre la pression Pm dans le tronc de soufflage, la pression Ps est régulée par le contrôle de l'ouverture supplémentaire de la vanne de compensation à l'extraction ou des vannes de régulation dédiées à l'extraction.

Grâce à l'équilibrage des débits extraits et soufflés, le contrôle du débit d'air extrait permet de contrôler le débit d'air soufflé et ainsi de contrôler la pression de soufflage Ps afin que Ps = Pm.

Si l'air soufflé par le dispositif à double flux est en excès, la pression Ps est contrôlée par l'ouverture supplémentaire des vannes de soufflage (ou de régulation), prévues dans la cinquième étape décrite ci-dessus.

De manière générale, à l'installation du système de distribution d'air, il est nécessaire de déterminer les coefficients de perte de charge $Kt_n$, comme exposé ci-dessus, la dépendance avec les débits d'air transporté $Q_n$, la pression Ps dans le tronc commun, et la position $\alpha_n$ de la vanne de régulation, d'après les équations ci-dessus :

$$Ps = Q^2_{n*}( Kt_n + Kv(\alpha_n) )$$

qui peut se transcrire comme :

$$Kt_n = Ps / Q^2_n - Kv(\alpha_n)$$

ou bien comme :

$$Q_n = sqrt(Ps/( Kt_n + Kv(\alpha_n)))$$

Dans cette dernière équation, il manque seulement $Q_n$ pour déterminer le coefficient de perte de charge $Kt_n$ car Ps est mesurable et $Kv(\alpha)$ est connue par avance depuis la calibration en laboratoire.

Plusieurs solutions sont envisageables pour obtenir ce $Q_n$ théorique qui est différent du $Q_n$ de la première étape du procédé obtenu par mesure puis conversion.

S'il est possible de mesurer le débit total d'air soufflé :

- une boucle de régulation en pression est ouverte (pas de régulation de Ps), laissant le ventilateur de soufflage tourner à un régime déterminé, approximativement fixe,
- il est commandé séquentiellement divers jeux d'ouvertures sur les vannes de régulation et le débit total est mesuré à chaque fois.

Pour l'itération i, la somme des débits dans les conduits de distribution est écrite sous la forme :

$$Q_i = sqrt(P_i/( Kt_1 + Kv(\alpha_{i1})) + sqrt(P_i/( K_2 + Kv(\alpha_{i2})) + ...+ sqrt(P_i/( Kt_n + Kv(\alpha_{in}))$$

Après un nombre adéquat de mesures, il est obtenu un système d'équations suffisant pour le résoudre en rapport avec les inconnues $Kt_n$.

Le jeu des ouvertures des vannes de régulation est choisi de façon à obtenir un système d'équation à solution unique.

Il est nécessaire d'analyser l'influence du jeu d'ouverture sur la précision du résultat et d'optimiser son choix en minimisant l'impact des erreurs de mesure et de calcul.

Au cours des mesures effectuées dans cette série, il n'est pas nécessaire d'avoir une pression exacte. Ce qui est utile, c'est l'interdépendance entre $Q_i$, $P_i$ et $\alpha_{in}$.

L'ouverture de la boucle de régulation en pression, citée comme option, permet, dans certains cas, d'améliorer la précision de mesure de la pression et du débit d'air par l'élimination des variations dues au régime transitoire potentiellement long, induit par cette boucle.

Une méthode plus simple est applicable quand il est utilisé le contrôle direct avec le moteur de ventilation.

Le moteur de soufflage est piloté pour obtenir un débit d'air quasi constant et toutes les vannes de régulation sont fermée sauf une.

Au moins deux mesures de pression sont prises avec la vanne de régulation en différentes positions d'ouverture (de préférence au moins en positions fermée et ouverte). Il en résulte deux équations de la même forme :

$$Q^2 = P_1 / (Kt_n + Kv(\alpha_1)) = P_2 / (Kt_n + Kv(\alpha_2))$$

D'où on extrait:

$$Kt_n = ( P_1 * Kv(\alpha_2) - P_2 * Kv(\alpha_1) ) / (P_2 - P_1)$$

Il existe plusieurs jeux possibles de points de mesures qui peuvent résoudre les inconnues $Kt_n$. Il est choisi les points de mesure qui sont les plus appropriés pour réduire l'impact des erreurs de mesure.

Les équations définies précédemment sont citées à titre d'exemple pour une modélisation simple. Elles ne sont pas limitatives et d'autres modèles aérauliques peuvent être utilisés en variante.

Le procédé de distribution d'air soufflé vers ou extrait depuis au moins une pièce d'un habitat selon la présente invention peut équiper une multitude de systèmes de ventilation différents. Il s'applique à la ventilation pour la qualité de l'air à respirer, pour le conditionnement thermique des pièces ou pour les deux à la fois. Le procédé est particulièrement attractif pour être appliqué dans les installations de ventilation à double flux.

**Revendications**

1. Procédé de distribution de l'air de ventilation soufflé vers ou extrait depuis les pièces d'un habitat à travers un réseau de distribution comprenant des conduits de distribution, ledit procédé utilisant un ou plusieurs capteurs de demande de ventilation de pièce disposés dans au moins une pièce et utilisant un capteur de pression, ce capteur de pression étant installé de sorte à mesurer la pression dans un tronc commun de soufflage, quand le procédé est appliqué à l'air soufflé ou étant installé de sorte à mesurer la pression dans un tronc commun d'extraction, quand le procédé est appliqué à l'air extrait et ledit procédé utilisant des vannes de régulation commandables pour moduler l'air distribué, **caractérisé en ce que** le transport de l'air est réalisé à une pression minimale Pm dans le tronc commun déterminée à partir des capteurs de demande de ventilation de pièce et des paramètres aérauliques du réseau de distribution, le procédé comprenant :

    - une première étape d'acquisition d'information de demande de ventilation de la pièce par au moins un des capteurs de demande de ventilation de pièce et de conversion en demandes de débit d'air $Q_n$ associé à chaque conduit de distribution,
    - une deuxième étape de calcul pour chacun des n conduits de distribution d'air de ventilation, d'une pression $Ps_n$ lorsque de l'air est soufflé ou $Pe_n$ lorsque de l'air est extrait, nécessaire dans le tronc commun pour assurer le débit d'air demandé $Q_n$ dans chaque conduit de distribution, en considérant la vanne de régulation en position d'ouverture maximale et en prenant en compte les coefficients de perte de charge $Kt_n$ dus aux pertes de charge pendant le trajet de l'air dans les conduits de distribution respectifs,
    - une troisième étape de détermination de la pression maximale Pm parmi les valeurs de pressions d'air $Ps_n$ ou Pen calculées, cette valeur Pm étant la pression minimale qui satisfait les besoins de ventilation de toutes les pièces, et
    - une quatrième étape de calcul des positions d'ouverture $\alpha_n$ pour chaque vanne de régulation permettant d'obtenir un débit d'air ajusté dans chaque conduit de distribution en fonction de la pression Pm, du débit d'air demandé $Q_n$ et du coefficient de perte de charge $Kt_n$ sur le trajet de l'air dans chaque conduit de distribution, les informations de positions d'ouverture étant transmises vers les vannes de régulation.

2. Procédé selon la revendication 1, **caractérisé en ce qu'**il comprend au moins une étape de détermination des débits individuels dans chaque conduit de distribution comportant des étapes de mesures, de calcul et/ou de lecture d'abaques ou de tableaux ou de combinaisons de ces méthodes.

3. Procédé selon l'une quelconque des revendications précédentes, **caractérisé en ce qu'**il comprend une cinquième étape de calcul de la somme des débits d'air demandés Qt et d'augmentation des ouvertures des vannes de régulation si le besoin en débit d'air est supérieur à la somme des débits d'air demandés Qt.

4. Procédé selon l'une quelconque des revendications précédentes, **caractérisé en ce que**, lors de la deuxième étape, pour calculer la pression $Ps_n$ demandée, il est appliqué la formule $Ps_n = Q^2{}_n * ( Kt_n + Kv(0))$ dans laquelle n est l'index d'un conduit de distribution, $Q_n$ est le débit d'air demandé, $Kt_n$ est un coefficient de perte de charge spécifique au trajet de l'air dans le conduit de distribution et Kv(0) est la perte de charge induite par la vanne de régulation en position ouverte au maximum.

5. Procédé selon l'une quelconque des revendications précédentes, **caractérisé en ce que**, lors de la quatrième

étape, $\alpha_n$ est calculé avec la formule suivante: $\alpha_n = K^{-1}_v(Ps/Q^2 - Kt_n)$, $K^{-1}_v$ étant la fonction réciproque du coefficient de perte de charge $Kv(\alpha)$.

6. Procédé selon l'une quelconque des revendications précédentes, **caractérisé en ce qu'**il comprend, parallèlement aux étapes 1 à 4, une opération de régulation de la pression dans le tronc commun de façon à ce que cette pression soit égale à la pression Pm calculée lors de la troisième étape du procédé.

7. Procédé selon l'une quelconque des revendications précédentes, **caractérisé en ce que** les capteurs de demande de ventilation de pièce mesurent un taux de $CO_2$, de CO, de COV ou d'humidité ou la présence ou le mouvement d'une personne dans la pièce ou la température ou la pression différentielle intérieur/extérieur de l'habitat.

8. Procédé selon l'une quelconque des revendications 6 ou 7, **caractérisé en ce que** le contrôle de la pression est réalisé par un capteur de pression positionné dans le tronc commun.

9. Procédé selon l'une quelconque des revendications 6 ou 7, **caractérisé en ce que** le contrôle de la pression est réalisé par le contrôle de la vitesse du moteur du ventilateur.

10. Procédé selon l'une quelconque des revendications précédentes, **caractérisé en ce qu'**il est appliqué à un système de ventilation comportant un dispositif de ventilation du type à double flux, l'ajustement à la pression Pm, en cas d'insuffisance de pression, étant réalisé en provoquant la variation du flux d'air opposé et indirectement, par l'intermédiaire de l'équilibrage des débits extraction/soufflage présents dans le dispositif de ventilation à double flux.

11. Procédé selon l'une quelconque des revendications précédentes, **caractérisé en ce que** les coefficients de perte de charge $Kt_n$ dans chaque conduit de distribution sont calculés à partir de plusieurs mesures de débit total et de la pression dans le tronc commun, pour différentes positions d'ouvertures des vannes de régulation, une boucle de régulation en pression étant ouverte, laissant le ventilateur tourner à un régime déterminé, approximativement fixe.

12. Procédé selon la revendication 9, **caractérisé en ce que** chaque coefficient de perte de charge $Kt_n$ est calculé à partir d'au moins deux mesures de pression dans le tronc commun correspondant à deux positions d'ouvertures distinctes d'une vanne de régulation et en condition de débit d'air total quasi constant, les autres vannes de régulation étant fermées.

**Patentansprüche**

1. Verfahren zum Verteilen der Lüftungsluft, die zu den Räumen eines Wohnraums geblasen oder aus ihnen abgesaugt wird über ein Verteilungsnetz, das Verteilungskanäle umfasst, wobei das Verfahren einen oder mehrere Raumbelüftungsanforderungssensoren verwendet, die in mindestens einem Raum angeordnet sind, und einen Drucksensor verwendet, wobei der Drucksensor installiert ist, um den Druck in einem gemeinsamen Blasschacht zu messen, wenn das Verfahren auf die Zuluft angewendet wird, oder installiert ist, um den Druck in einem gemeinsamen Abluftschacht zu messen, wenn das Verfahren auf die Abluft angewendet wird, und wobei das Verfahren steuerbare Regulierventile verwendet, um die verteilte Luft zu regulieren, **dadurch gekennzeichnet, dass** der Transport der Luft bei einem minimalen Druck Pm in dem gemeinsamen Schacht durchgeführt wird, der anhand der Raumbelüftungsanforderungssensoren und der lufttechnischen Parameter des Verteilungsnetzes bestimmt wird, wobei das Verfahren Folgendes umfasst:

- einem ersten Schritt des Erfassens von Raumbelüftungsanforderungsinformationen durch mindestens einen der Raumbelüftungsanforderungssensoren und des Umwandelns in Luftströmungsanforderungen $Q_n$, die jedem Verteilungskanal zugeordnet sind,
- einem zweiten Schritt des Berechnens, für jeden der n Verteilungskanäle der Lüftungsluft, eines Drucks $Ps_n$, wenn die Luft geblasen wird, oder $Pe_n$, wenn die Luft abgesaugt wird, der in dem gemeinsamen Schacht erforderlich ist, um die angeforderte Luftströmung $Q_n$ in jedem Verteilungskanal sicherzustellen, unter Berücksichtigung des Regelventils bei maximaler Öffnungsposition und unter Einbeziehung der Druckverlustkoeffizienten $Kt_n$ aufgrund der Druckverluste während des Pfads der Luft durch die jeweiligen Verteilungskanäle,
- einem dritten Schritt des Bestimmens des maximalen Drucks Pm aus den berechneten Luftdruckwerten $Ps_n$ oder Pen, wobei dieser Wert Pm der minimale Druck ist, der den Belüftungsbedarf aller Räume erfüllt, und
- einem vierten Schritt des Berechnens der Öffnungspositionen $\alpha_n$ für jedes Regulierungsventil, das es ermöglicht, eine Luftströmung zu erhalten, die in jedem Verteilungskanal entsprechend dem Druck Pm, der angefor-

derten Luftströmung $Q_n$ und dem Druckverlustkoeffizienten $Kt_n$ auf den Weg der Luft in jedem Verteilungskanal eingestellt wird, wobei die Informationen über die Öffnungspositionen an die Regulierungsventile übertragen werden.

2. Verfahren nach Anspruch 1, **dadurch gekennzeichnet, dass** es mindestens einen Schritt des Bestimmens der individuellen Strömungen in jedem Verteilungskanal umfasst, der Schritte des Messens, Berechnens und/oder Lesens von Diagrammen oder Tabellen oder Kombinationen dieser Methoden umfasst.

3. Verfahren nach einem der vorhergehenden Ansprüche, **dadurch gekennzeichnet, dass** es einen fünften Schritt des Berechnens der Summe der angeforderten Luftströmungen Qt und des Vergrößerns der Öffnungen der Regulierungsventile umfasst, wenn der Luftströmungsbedarf größer ist als die Summe der angeforderten Luftströmungen Qt.

4. Verfahren nach einem der vorhergehenden Ansprüche, **dadurch gekennzeichnet, dass** im zweiten Schritt zum Berechnen des angeforderten Drucks $Ps_n$ die Formel $Ps_n = Q_n^2 * (Kt_n + Kv(0))$ angewendet wird, in der n der Index eines Verteilungskanals ist, $Q_n$ die angeforderte Luftströmung ist, $Kt_n$ ein Druckverlustkoeffizient ist, der für den Weg der Luft im Verteilungskanal spezifisch ist, und $Kv(0)$ der Druckverlust ist, der durch das Regulierungsventil in der maximal geöffneten Position induziert wird.

5. Verfahren nach einem der vorhergehenden Ansprüche, **dadurch gekennzeichnet, dass** im vierten Schritt $\alpha_n$ mit folgender Formel berechnet wird: $\alpha_n = K^{-1}_v(Ps/Q^2 - Kt_n)$, wobei $K^{-1}_v$ die Umkehrfunktion des Druckverlustkoeffizienten $Kv(\alpha)$ ist.

6. Verfahren nach einem der vorhergehenden Ansprüche, **dadurch gekennzeichnet, dass** es parallel zu den Schritten 1 bis 4 einen Vorgang des Regulierens des Drucks in dem gemeinsamen Schacht derart umfasst, dass dieser Druck gleich dem berechneten Druck Pm während des dritten Schritts des Verfahrens ist.

7. Verfahren nach einem der vorhergehenden Ansprüche, **dadurch gekennzeichnet, dass** die Raumbelüftungsanforderungssensoren eine Rate von $CO_2$, CO, VOC oder der Feuchtigkeit oder die Anwesenheit oder Bewegung einer Person im Raum oder die Temperatur oder der Druckunterschied zwischen Innen- und Außenseite des Wohnraums messen.

8. Verfahren nach einem der Ansprüche 6 oder 7, **dadurch gekennzeichnet, dass** die Steuerung des Drucks durch einen Drucksensor durchgeführt wird, der in dem gemeinsamen Schacht angeordnet ist.

9. Verfahren nach einem der Ansprüche 6 oder 7, **dadurch gekennzeichnet, dass** die Steuerung des Drucks durch die Steuerung der Geschwindigkeit des Motors des Ventilators durchgeführt wird.

10. Verfahren nach einem der vorhergehenden Ansprüche, **dadurch gekennzeichnet, dass** es auf ein Belüftungssystem angewendet wird, das eine Doppelstrom-Belüftungsvorrichtung umfasst, wobei das Anpassen an den Druck Pm im Falle eines unzureichenden Drucks durch das Herbeiführen der Veränderung eines entgegengesetzten Luftflusses und indirekt über den Ausgleich der in der Doppelstrom-Belüftungsvorrichtung vorhandenen Abluft-/Zuluftströmungen erreicht wird.

11. Verfahren nach einem der vorhergehenden Ansprüche, **dadurch gekennzeichnet, dass** die Druckverlustkoeffizienten $Kt_n$ in jedem Verteilungskanal aus mehreren Messungen der Gesamtströmung und des Drucks in dem gemeinsamen Schacht für unterschiedliche Öffnungspositionen der Regulierungsventile berechnet werden, wobei ein Druckregelkreis geöffnet ist, der den Lüfter mit einer bestimmten, annähernd festen Drehzahl laufen lässt.

12. Verfahren nach Anspruch 9, **dadurch gekennzeichnet, dass** jeder Druckverlustkoeffizient $Kt_n$ aus mindestens zwei Druckmessungen im gemeinsamen Schacht berechnet wird, die zwei unterschiedlichen Öffnungspositionen eines Regulierungsventils entsprechen, und zwar in einem Zustand einer nahezu konstanten Gesamtluftströmung, wobei die anderen Regulierungsventile geschlossen sind.

**Claims**

1. A method for distributing the ventilation air blown towards the rooms of a dwelling or extracted therefrom through a distribution network comprising distribution ducts, said method using one or several room ventilation request sensors disposed in at least one room and using a pressure sensor, this pressure sensor being installed so as to measure the pressure in a blowing common section, when the method is applied to the blown air or being installed so as to measure the pressure in an extraction common section, when the method is applied to the extracted air and said method using controllable regulation valves to modulate the distributed air, **characterized in that** the conveying of air is carried out at a minimum pressure Pm in the common section determined from the room ventilation request sensors and from the aeraulic parameters of the distribution network, the method comprising:

- a first step of acquiring room ventilation request information by at least one of the room ventilation request sensors and of converting into requests of air flow rate $Q_n$, associated with each distribution duct,
- a second step of calculating for each of the n ventilation air distribution ducts, a pressure $Ps_n$, when air is blown or $Pe_n$, when air is extracted, that is required in the common section to ensure the requested air flow rate $Q_n$, in each distribution duct, by considering the regulation valve in the maximum open position and taking into account the pressure drop coefficients $Kt_n$, due to the pressure drops on the air pathway in the respective distribution ducts,
- a third step of determining the maximum pressure Pm from among the air pressure calculated values $Ps_n$, or $Pe_n$, said value Pm being the minimum pressure which satisfies the ventilation needs of all rooms, and
- a fourth step of calculating the opening positions $\alpha_n$, for each regulation valve making it possible to obtain an air flow rate adjusted in each distribution duct as a function of the pressure Pm, of the requested air flow rate $Q_n$, and of the pressure drop coefficient $Kt_n$, on the air pathway in each distribution duct, the opening position information being transmitted to the regulation valves.

2. The method according to claim 1, **characterized in that** it comprises at least one step of determining the individual flow rates in each distribution duct including steps of measuring, calculating and/or reading charts or tables or combinations of these methods.

3. The method according to any one of the preceding claims, **characterized in that** it comprises a fifth step of calculating the sum of the requested air flow rates Qt and of increasing the openings of the regulation valves if air flow rate needed is greater than the sum of the requested air flow rates Qt.

4. The method according to any one of the preceding claims, **characterized in that**, during the second step, of calculating the requested pressure $Ps_n$, the formula $Ps_n = Q^2_n * (Kt_n + Kv(0))$ is applied, in which n is the index of a distribution duct, $Q_n$ is the requested air flow rate, $Kt_n$ is a pressure drop coefficient specific to the air pathway in the distribution duct and $Kv(0)$ is the pressure drop induced by the regulation valve in the maximum open position.

5. The method according to any one of the preceding claims, **characterized in that**, during the fourth step, $\alpha_n$ is calculated with the following formula:
$\alpha_n = K^{-1}_v(Ps/Q^2 - Kt_n)$, $K^{-1}_v$ being the reciprocal function of pressure drop coefficient $Kv(\alpha)$.

6. The method according to any one of the preceding claims, **characterized in that** it comprises, simultaneously with steps 1 to 4, an operation for regulating the pressure in the common section so that this pressure is equal to the pressure Pm calculated during the third step of the method.

7. The method according to any one of the preceding claims, **characterized in that** the room ventilation request sensors measure a level of $CO_2$, CO, COV or of humidity or the presence or the movement of a person in the room or the differential pressure or temperature inside/outside the dwelling.

8. The method according to any one of claims 6 to 7, **characterized in that** the control of the pressure is carried out by a pressure sensor positioned in the common section.

9. The method according to any one of claims 6 to 7, **characterized in that** the control of the pressure is carried out by the control of the speed of the motor of the fan.

10. The method according to any one of the preceding claims, **characterized in that** it is applied to a ventilation system including a ventilation device of the double-flow type, the adjustment to the pressure Pm, in the event of insufficient pressure, being carried out by causing the variation of the opposite air flow and indirectly, through the balancing of the extraction/blowing flow rates present in the double-flow ventilation device.

**11.** The method according to any one of the preceding claims, **characterized in that** the pressure drop coefficients $Kt_n$, in each distribution duct are calculated from several measurements of total flow rates and of the pressure in the common section, for different opening positions of the regulation valves, a pressure regulation loop being open, allowing the fan to run at an approximately fixed determined speed.

**12.** The method according to claim 9, **characterized in that** each pressure drop coefficient $Kt_n$ is calculated from at least two pressure measurements in the common section corresponding to two distinct opening positions of a regulation valve and in a condition of near-constant total air flow rate, the other regulation valves being closed.

Fig.1

**EP 3 502 580 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2899319
- GB 2449498 A
- FR 3028012
- EP 2363656 A
- EP 2363656 B1
- FR 3017448